# EUROPEAN PATENT APPLICATION

(11) **EP 4 456 459 A1**
(43) Date of publication of application: **30.10.2024**
(21) Application number: 22921111.5
(22) Date of filing: 20.01.2022
(51) Int. Cl.: H04L 1/00

(54) **DATA TRANSMISSION METHOD AND DATA TRANSMISSION APPARATUS**

(71) Applicant: Huawei Technologies Co., Ltd., Shenzhen, Guangdong 518129 (CN)
(72) Inventor: NIE, Er, Shenzhen, Guangdong 518129 (CN); PAN, Wei, Shenzhen, Guangdong 518129 (CN)
(74) Representative: Huawei European IPR
(86) International application number: PCT/CN2022/073010
(87) International publication number: WO 2023/137666

(57) **Abstract**

Embodiments of this application provide a data transmission method and a data transmission apparatus. The data transmission method includes: generating a bitstream, where the bitstream includes data and a control word, and the control word includes: a first field indicating start location information of the control word, a second field indicating end location information of the control word, and a third field used to carry link information indicating a wired serial link; and sending the bitstream over the wired serial link. The data transmission method can reduce complexity of a control signal transmitted at a physical layer.

## Description

### TECHNICAL FIELD

Embodiments of this application relate to the field of communication networks, and in particular, to a data transmission method and a data transmission apparatus.

### BACKGROUND

In a communication network technology, communication apparatuses usually communicate with each other over data links, and a physical layer at a signal transmit end transmits a bitstream to a physical layer at a signal receive end over a link, for signal exchange between the communication devices. The bitstream includes both an encoded data signal and multiple control signals indicating information like a link configuration or a link status, such that the signal receive end accurately decodes data from the bitstream. For example, the multiple control signals include a control signal indicating frame delimitation of a data packet and a control signal indicating a link bandwidth. The multiple control signals are independent encoding segments. In addition, the multiple control signals are usually added to specific locations of the data signal for transmission.

However, with continuous evolution of a working rate at the physical layer and more accurate control on the link, more control signals need to be set to meet requirements. Consequently, a quantity of control signals is large such that a design at the physical layer in the communication apparatus is complex, and physical layer costs increase. Therefore, how to reduce complexity of a control signal transmitted at a physical layer becomes a problem to be resolved.

### SUMMARY

According to a data transmission method and a data transmission apparatus provided in this application, complexity of a control signal transmitted at a physical layer can be reduced. To achieve the foregoing objective, the following technical solutions are used in this application.

According to a first aspect, an embodiment of this application provides a data transmission method. The data transmission method is applied at a transmit end, and includes: generating a bitstream, where the bitstream includes data and a control word, and the control word includes: a first field indicating start location information of the control word, a second field indicating end location information of the control word, and a third field used to carry link information indicating a wired serial link; and sending the bitstream over the wired serial link.

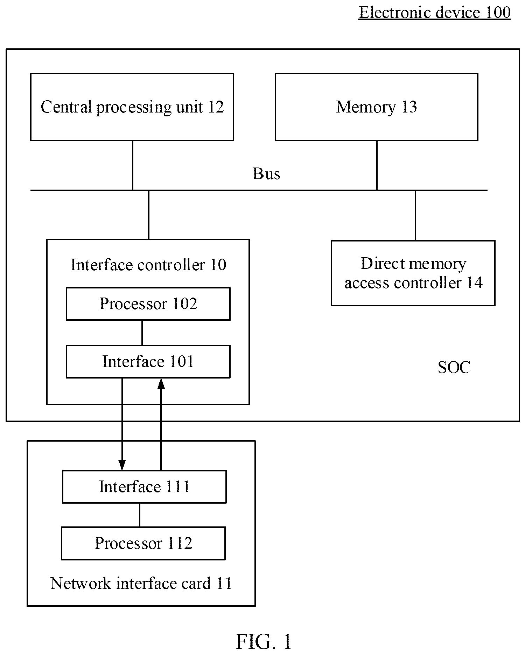

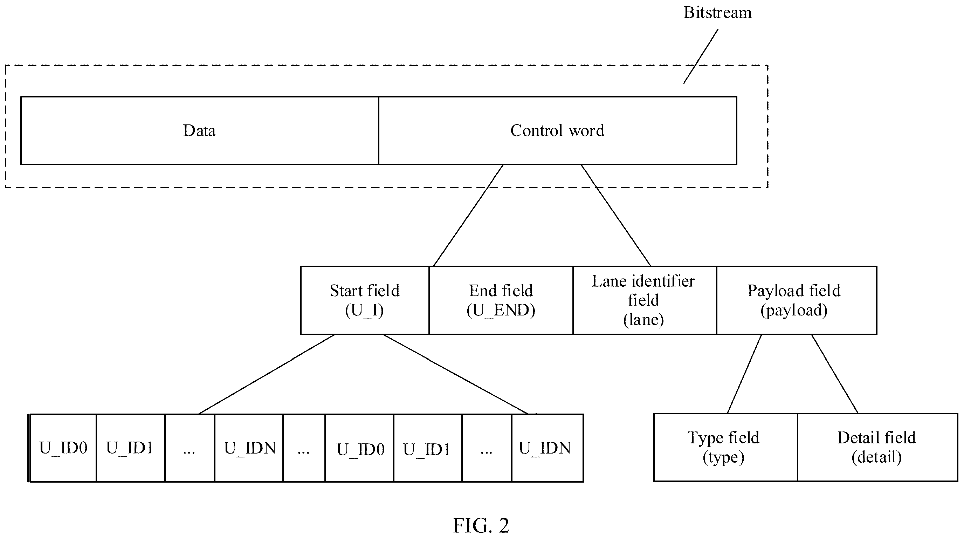

In this implementation, the transmit end may be, for example, an interface controller shown in FIG. 1, FIG. 4A and FIG. 4B, and FIG. 5. The first field indicating the start location information of the control word may be, for example, a start field shown in FIG. 2. The second field indicating the end location information of the control word may be, for example, an end field shown in FIG. 2. The third field used to carry the link information indicating the wired serial link may be, for example, a payload field shown in FIG. 2.

In a conventional wired serial link, encoding segments are usually used to transmit data between two communication apparatuses, implement link alignment, and transfer various information about the link, and one type of information is one encoding segment. For example, information indicating link power consumption is an encoding segment, and information indicating a status of each circuit in the link is an encoding segment. In other words, there are multiple encoding segments for implementing link alignment. However, with continuous evolution of a working rate at the physical layer and more accurate control on the link, more link information needs to be set to meet requirements. Consequently, an amount of link information is large, that is, a quantity of encoding segments is large, such that a design at the physical layer in the communication apparatus is complex, and physical layer design costs increase. The control word provided in this embodiment of this application is set to a structure including the first field, the second field, and the third field, to carry the link information in the third field. This can implement that one control word indicates multiple pieces of link information, reduce complexity of a control signal transmitted at a physical layer, and simplify a design at the physical layer. In addition, because the second field in the control word indicates the end location information of the control word, that is, the second field in the control word may limit a length of the control word. Further, an amount of link information carried in the control word may be flexibly adjusted by flexibly adjusting the end location information of the control word, to provide flexibility of the control word.

Optionally, the end location information may be a length or an end location of the control word. The end location may be, for example, a location after a preset quantity of bits starting from the second field.

Optionally, the data is service data or training data.

In a possible implementation, the link information includes at least one of the following: a quantity of lanes for transmitting a first bitstream, a power consumption status of hardware in a link, a working status of a circuit in a link, or a gain of a codec used in a link.

To reduce power consumption of hardware in the link at the physical layer, power consumption of each hardware in the link usually includes multiple types, for example, low power consumption, medium power consumption, and high power consumption. For example, when hardware such as a scrambler and a data distributor included in the link is in one of the following modes: standby, sleep, or power-off, the hardware in the link is in a low power consumption state. When a portion of the hardware included in the link is in one of the following modes: standby, sleep, or power-off, and another portion of the hardware is in a working state, the hardware in the link is in a medium power consumption state. When all components in the link are in a working state, the hardware in the link is in a high power consumption state. For example, when transmitted data is training data, it may indicate that power consumption of each piece of hardware in the link is low power consumption. When the transmitted data is service data, it may indicate that power consumption of each piece of hardware in the link is medium power consumption or high power consumption. A working status of the circuit in the link may include, for example, a power-on state or a power-off state. For example, when the transmitted data is training data, a status of a codec circuit may be a power-off state. When the transmitted data is service data, a status of the codec circuit may be a power-on state. Therefore, the transmit end may add, to the third field, information such as one of the multiple power consumption statuses, information indicating one working status of the circuit in the link, and information indicating the gain of the codec, and transmit the information to a receive end.

In a possible implementation, the first field and the second field indicate the receive end to perform frame delimitation on the data.

In this possible implementation, the control word may be followed by data content of the data. In other words, the first field and the second field in the control word may be used as a frame header of a data frame. After identifying the first field and the second field in the control word, the receive end may determine a start location (namely, a frame delimiter) of the data, to read the data from the bitstream. In this embodiment of this application, the first field and the second field in the control word are used as the frame header of the data frame, so that the frame header of the data frame does not need to be additionally set. This can simplify a design of a bitstream.

In a possible implementation, there are multiple bitstreams, there are multiple lanes over the wired serial link, the multiple bitstreams one-to-one correspond to the multiple lanes, and the sending the bitstream over the wired serial link specifically includes: sending the corresponding plurality of streams through the multiple lanes.

When there are the multiple lanes over the wired serial link, one control word is set in each lane, so that the receive end can accurately read data from a bitstream transmitted on each lane based on the control word in each lane. This improves data reading accuracy of the receive end.

In a possible implementation, the control word further includes a fourth field indicating a lane number.

The fourth field may be, for example, a lane identifier field shown in FIG. 2.

In this implementation, the fourth field that is in the control word and that indicates the lane number is set, so that the receive end can adjust, based on each lane number, a sequence of data received from each lane. This improves accuracy of data received by the receive end.

In a possible implementation, the first field includes multiple groups of same fields, and each group of fields includes multiple bits. The multiple groups of same fields are used to compensate for a difference between a clock cycle of the transmit end and a clock cycle of the receive end.

In this implementation, the transmit end may encode the first field into consecutive "0" "1" signals, and then send the bitstream to the receive end based on a local clock cycle over the wired serial link. After receiving the bitstream, the receive end first restores the clock cycle of the transmit end from the first field, and then adds at least one group of fields to or deletes at least one group of fields from the multiple groups of same fields based on an offset between the restored clock cycle and the local cycle.

For example, a buffer queue may be disposed in the receive end, and the receive end writes, into the buffer queue based on the clock cycle restored from the first field, data carried in the first field. In addition, the receive end may further read the data from the buffer queue based on the local clock cycle. The two operations are performed simultaneously. When the receive end detects that a rate of writing the data into the buffer queue is greater than a rate of reading the data from the buffer queue, it indicates that the clock cycle of the transmit end is greater than the clock cycle of the receive end. In this case, at least one group of fields is deleted from the multiple groups of same fields included in the first field, to ensure clock cycle synchronization between the transmit end and the receive end. When the receive end detects that the rate of writing the data into the buffer queue is less than the rate of reading the data from the buffer queue, it indicates that the clock cycle of the transmit end is less than the clock cycle of the receive end. In this case, at least one group of fields of the multiple groups of same fields is added to the first field, to implement clock cycle synchronization between the transmit end and the receive end.

In the conventional technology, because no structured control word is set, a sequence dedicated to compensating for the difference between the clock cycle of the transmit end and the clock cycle of the receive end is usually set in the transmitted bitstream, and the sequence does not carry any useful data. In this embodiment of this application, the multiple groups of same fields are set in the first field in the control word, so that the control word can implement more functions. In other words, the sequence dedicated to compensating for the difference between the clock cycle of the transmit end and the clock cycle of the receive end does not need to be additionally set in the bitstream. In comparison with the conventional technology, a design at a physical layer can be simplified.

In a possible implementation, when the data is training data, the generating a bitstream includes: adding the control word after the data, to generate the bitstream.

According to a second aspect, an embodiment of this application provides a data transmission method. The data transmission method is applied at a receive end, and includes: receiving a bitstream, where the bitstream includes data and a control word, and the control word includes: a first field indicating start location information of the control word, a second field indicating end location information of the control word, and a third field used to carry link information indicating a wired serial link; reading the control word from the bitstream based on the first field and the second field; and reading the data from the bitstream based on the control word.

In this implementation, the receive end may be, for example, a network interface card shown in FIG. 1, FIG. 4A and FIG. 4B, and FIG. 5. The first field indicating the start location information of the control word may be, for example, a start field shown in FIG. 2, the second field indicating the end location information of the control word may be, for example, an end field shown in FIG. 2, and the third field used to carry the link information indicating the wired serial link may be, for example, a payload field shown in FIG. 2.

The control word provided in this embodiment of this application is set to a structure including the first field, the second field, and the third field, to carry the link information in the third field. This can implement that one control word indicates multiple pieces of link information, and simplify a design at the physical layer. In addition, because the second field in the control word indicates the end location information of the control word, that is, the second field in the control word may limit a length of the control word. Further, an amount of link information carried in the control word may be flexibly adjusted by flexibly adjusting the end location information of the control word, to provide flexibility of the control word.

In a possible implementation, the method further includes: adjust, based on the link information, at least one of the wired serial link: a power consumption status of hardware in a link, a working status of a circuit in a link, or a gain of a codec used in a link.

To reduce power consumption of hardware in the link at the physical layer, power consumption of each hardware in the link usually includes multiple types, for example, low power consumption, medium power consumption, and high power consumption. For example, when transmitted data is training data, it may indicate that power consumption of each piece of hardware in the link is low power consumption. When the transmitted data is service data, it may indicate that power consumption of each piece of hardware in the link is medium power consumption or high power consumption. A working status of the circuit in the link may include, for example, a power-on state or a power-off state. For example, when the transmitted data is training data, a status of a codec circuit may be a power-off state. When the transmitted data is service data, a status of the codec circuit may be a power-on state. The receive end adjusts, based on one of the multiple power consumption statuses, one working status of the circuit in the link, and the gain of the codec that are indicated by the third field, the power consumption status of the hardware in the link to the power consumption status indicated by the third field, adjusts the working status of the circuit in the link to the working status indicated by the third field, and adjusts the gain of the codec to the gain indicated by the third field.

In a possible implementation, the reading the data from the bitstream based on the control word includes: determining a coding length of the control word based on the first field and the second field; identifying a frame start location of the data from the bitstream based on the coding length of the control word, where the frame start location of the data is located after the control word; and reading the data based on the frame start location of the data.

In this possible implementation, the control word may be followed by data content of the data. In other words, the first field and the second field in the control word may be used as a frame header of a data frame. After identifying the first field and the second field in the control word, the receive end may determine a start location of the data, to read the data from the bitstream. In this embodiment of this application, the first field and the second field in the control word are used as the frame header of the data frame, so that the frame header of the data frame does not need to be additionally set. This can simplify a design of a bitstream.

In a possible implementation, there are multiple bitstreams, there are multiple lanes over the wired serial link, the multiple bitstreams are received from the transmit end through the multiple corresponding lanes, the link information further includes a quantity of lanes for transmitting the multiple bitstreams, and the control word further includes a fourth field indicating a lane number. The reading the data from the bitstream based on the control word includes: reading, based on the quantity of lanes for transmitting the bitstreams and the fourth field, the data from the bitstream received through a corresponding lane.

The fourth field may be, for example, a lane identifier field shown in FIG. 2.

In a possible implementation, the method further includes: canceling data skew between the multiple lanes based on a sequence of the multiple received bitstreams and a fourth field in each of multiple control words in the multiple bitstreams.

In a possible implementation, the first field includes multiple groups of same fields, and each group of fields includes multiple bits. The method further includes: performing, based on a clock frequency offset between the receive end and the transmit end, one of the following operations: deleting at least one group of fields from the multiple groups of same fields, or adding at least one group of fields to the multiple groups of same fields.

In this implementation, the transmit end may encode the first field into consecutive "0" "1" signals, and then send the bitstream to the receive end based on a local clock cycle over the wired serial link. After receiving the bitstream, the receive end first restores a clock cycle of the transmit end from the first field, and then adds at least one group of fields to or deletes at least one group of fields from the multiple groups of same fields based on an offset between the restored clock cycle and the local cycle.

For example, a buffer queue may be disposed in the receive end, and the receive end writes, into the buffer queue based on the clock cycle restored from the first field, data carried in the first field. In addition, the receive end may further read the data from the buffer queue based on the local clock cycle. The two operations are performed simultaneously. When the receive end detects that a rate of writing the data into the buffer queue is greater than a rate of reading the data from the buffer queue, it indicates that the clock cycle of the transmit end is greater than a clock cycle of the receive end. In this case, at least one group of fields is deleted from the multiple groups of same fields included in the first field, to ensure clock cycle synchronization between the transmit end and the receive end. When the receive end detects that the rate of writing the data into the buffer queue is less than the rate of reading the data from the buffer queue, it indicates that the clock cycle of the transmit end is less than the clock cycle of the receive end. In this case, at least one group of fields of the multiple groups of same fields is added to the first field, to implement clock cycle synchronization between the transmit end and the receive end.

In the conventional technology, because no structured control word is set, a sequence dedicated to compensating for the difference between the clock cycle of the transmit end and the clock cycle of the receive end is usually set in the transmitted bitstream, and the sequence does not carry any useful data. In this embodiment of this application, the multiple groups of same fields are set in the first field in the control word, so that the control word can implement more functions. In other words, the sequence dedicated to compensating for the difference between the clock cycle of the transmit end and the clock cycle of the receive end does not need to be additionally set in the bitstream. In comparison with the conventional technology, a design at a physical layer can be simplified.

According to a third aspect, an embodiment of this application provides a data transmission apparatus. The data transmission apparatus includes a processor and an interface. The processor is configured to generate a bitstream. The bitstream includes data and a control word, and the control word includes: a first field indicating start location information of the control word, a second field indicating end location information of the control word, and a third field used to carry link information indicating a wired serial link. The interface sends the bitstream over the wired serial link.

In a possible implementation, the link information includes at least one of the following: a quantity of lanes for transmitting a bitstream, a power consumption status of hardware in a link, a working status of a circuit in a link, or a gain of a codec used in a link.

In a possible implementation, the first field and the second field indicate a receive end to perform frame delimitation on the data.

In a possible implementation, there are multiple bitstreams, there are multiple lanes over the wired serial link, and the multiple bitstreams one-to-one correspond to the multiple lanes. The interface is specifically configured to send the corresponding plurality of streams through the multiple lanes.

In a possible implementation, the control word further includes a fourth field indicating a lane number.

In a possible implementation, the first field includes multiple groups of same fields, and each group of fields includes multiple bits. The multiple groups of same fields are used to compensate for a difference between a clock cycle of the transmit end and a clock cycle of the receive end.

According to a fourth aspect, an embodiment of this application provides a data transmission apparatus. The data transmission apparatus includes a processor and an interface. The interface is configured to receive a bitstream. The bitstream includes data and a control word, and the control word includes: a first field indicating start location information of the control word, a second field indicating end location information of the control word, and a third field used to carry link information indicating a wired serial link. The processor is configured to read the control word from the bitstream based on the first field and the second field, and read the data from the bitstream based on the control word.

In a possible implementation, the processor is further configured to adjust, based on the link information, at least one of the wired serial link: a power consumption status of hardware in a link, a working status of a circuit in a link, or a gain of a codec used in a link.

In a possible implementation, the processor is specifically configured to: determine a coding length of the control word based on the first field and the second field; identify a frame start location of the data from the bitstream based on the coding length of the control word, where the frame start location of the data is located after the control word; and read the data based on the frame start location of the data.

In a possible implementation, there are multiple bitstreams, there are multiple lanes over the wired serial link, the multiple bitstreams are received from a transmit end through the multiple corresponding lanes, the link information further includes a quantity of lanes for transmitting the multiple bitstreams, and the control word further includes a fourth field indicating a lane number. The processor is specifically configured to read, based on the quantity of lanes for transmitting the bitstreams and the fourth field, the data from the bitstream received through a corresponding lane.

In a possible implementation, the processor is further configured to cancel data skew between the multiple lanes based on a sequence of the multiple received bitstreams and a fourth field in each of multiple control words in the multiple bitstreams.

In a possible implementation, the first field includes multiple groups of same fields, and each group of fields includes multiple bits. The processor is further configured to perform, based on a clock frequency offset between the data transmission apparatus and the transmit end, one of the following operations: deleting at least one group of fields from the multiple groups of same fields, or adding at least one group of fields to the multiple groups of same fields.

According to a fifth aspect, an embodiment of this application provides a computer-readable storage medium, configured to store a computer program. When the computer program is run by a processor, the data transmission method in the first aspect or the data transmission method in the second aspect is implemented.

According to a sixth aspect, an embodiment of this application provides a computer program product. When the computer program product runs on a processor, the data transmission method in the first aspect or the data transmission method in the second aspect is implemented.

It should be understood that the technical solutions in the second aspect to the sixth aspect of this application are consistent with the technical solutions in the first aspect of this application, beneficial effect achieved by the aspects and the corresponding feasible implementations is similar, and details are not described again.

### BRIEF DESCRIPTION OF DRAWINGS

To describe technical solutions in embodiments of this application more clearly, the following briefly introduces the accompanying drawings for describing embodiments of this application. It is clear that the accompanying drawings in the following description show merely some embodiments of this application, and a person of ordinary skill in the art may still derive other drawings from these accompanying drawings without creative efforts.
FIG. 1 is a diagram of a hardware architecture of an electronic device according to an embodiment of this application;
FIG. 2 is a diagram of a frame structure of a control word according to an embodiment of this application;
FIG. 3A is a diagram of an eBCH codeword set according to an embodiment of this application;
FIG. 3B is a diagram of a coding structure of a lane identifier according to an embodiment of this application;
FIG. 4A and FIG. 4B are a diagram of an architecture of hardware at a physical layer according to an embodiment of this application;
FIG. 5 is a flowchart of a data transmission method according to an embodiment of this application;
FIG. 6A and FIG. 6B are another flowchart of a data transmission method according to an embodiment of this application;
FIG. 7 is a diagram of a structure of a data transmission apparatus according to an embodiment of this application; and
FIG. 8 is a diagram of another structure of a data transmission apparatus according to an embodiment of this application.

### DESCRIPTION OF EMBODIMENTS

The following clearly and completely describes technical solutions in embodiments of this application with reference to the accompanying drawings in embodiments of this application. It is clear that the described embodiments are some but not all of embodiments of this application. All other embodiments obtained by a person of ordinary skill in the art according to embodiments of this application without creative efforts shall fall within the protection scope of this application.

"First" or "second" and similar words mentioned in the specification do not indicate any order, quantity, or significance, but are merely used to distinguish between different components. Similarly, similar words such as "one" or "a" also do not indicate a quantity limitation, but indicates at least one. Similar words such as "coupled" are not limited to a direct physical or mechanical connection, but may include an electrical connection, regardless of a direct or indirect connection, which is equivalent to a connection in a broad sense.

In embodiments of this application, a word such as "example" or "for example" is used to give an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a related concept in a specific manner. In descriptions of embodiments of this application, unless otherwise stated, "multiple" means two or more than two. For example, multiple lanes mean two or more lanes.

A data transmission system provided in embodiments of this application may include a transmit end and a receive end. Both the transmit end and the receive end may be electronic devices. For example, the electronic device may be a terminal device, for example, various types of portable devices such as a mobile phone, a PC computer, a tablet computer, a notebook computer, or a wearable device (for example, a smartwatch, an AR device, or a VR device). The electronic device may alternatively be a switch device, a router device, or the like. In an application scenario, the transmit end may be a terminal device, and the receive end may be a router device. The terminal device communicates with the router device over a wired serial link, to transmit a signal to the router device. In this application scenario, when the router device transmits a signal to the terminal device, the router device may alternatively be referred to as a transmit end, and the terminal device may alternatively be referred to as a receive end.

In addition, the transmit end and the receive end may also be modules, chips, circuit boards or components that are equipped with chips or chip sets, or chip sets that are disposed in an electronic device. The electronic device is, for example, the electronic device described above. A network interface card (network card) may be disposed in the electronic device, so that the electronic device may access a network through the network interface card for communication. The network may be, for example, the Ethernet. In an application scenario, the transmit end may be an interface controller integrated in the electronic device, and the receive end may be a network interface card disposed in the electronic device. The interface controller may communicate with the network interface card over a wired serial link. The interface controller transmits a bitstream to the network interface card over the wired serial link, and the network interface card encapsulates the received bitstream into an Ethernet frame, and sends the Ethernet frame to the Ethernet. In this application scenario, after receiving the bitstream from the Ethernet, the network interface card needs to transmit the received bitstream to the interface controller. In this case, the interface controller is a transmit end, and the network interface card is a receive end. In embodiments of this application, an example in which the transmit end is an interface controller and the receive end is a network interface card is used for description, but is not intended to limit the solutions.

FIG. 1 is a diagram of a structure of an electronic device 100 according to an embodiment of this application. In FIG. 1, the electronic device 100 includes one or more processors. The one or more processors include, for example, an interface controller 10 and a central processing unit (central processing unit, CPU) 12. Optionally, the one or more processors may be integrated into one or more chips, and the one or more chips may be considered as a chip set. In an optional implementation, the interface controller 10 and the CPU 12 may be integrated into a system on chip (system on chip, SOC) shown in FIG. 1, and apparatuses or components such as a memory 13 and a direct memory access controller (direct memory access controller, DMAC) 14 may further be integrated into the SOC. Signals are transmitted between the interface controller 10, the CPU 12, the memory 13, and the DMAC 14 through a bus. The CPU 12 may run a software program or a software plug-in, for example, operating system software and application software. The memory 13 may store the software program or the software plug-in required for running of the CPU 12. In addition, the memory 13 may further store instructions and data that are required for running of the CPU 12, and the CPU 12 obtains the instructions and the data from the memory 13 via the DMAC 14.

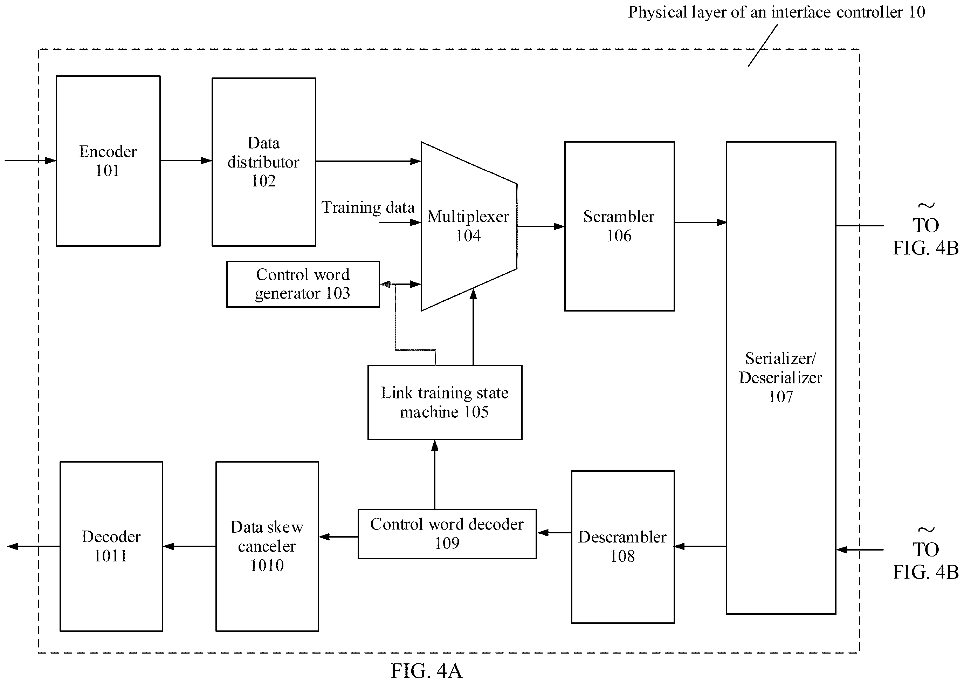

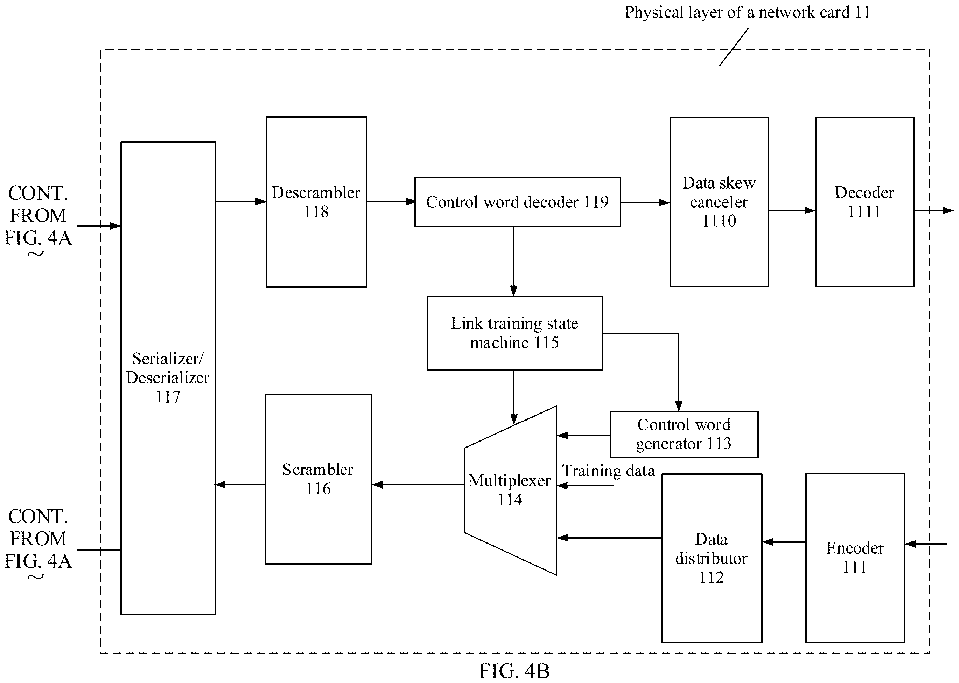

As shown in FIG. 1, the electronic device 100 further includes a network interface card 11. The network interface card 11 may be disposed outside the SOC shown in FIG. 1. The interface controller 10 includes an interface 101 and a processor 102. The network interface card 11 includes an interface 111 and a processor 112. The network interface card 11 is coupled to the interface 101 in the interface controller 10 through the interface 111. In an optional implementation, the interface 101 and the interface 111 may be serializer/deserializer (serializer/deserializer, SerDes) interfaces. The interface 101 may be coupled to the interface 111 via various physical media (for example, a twisted pair or a cable). Therefore, the electronic device 100 accesses a network through the network interface card 11, and communicates with another device (for example, a server device or a terminal device) in the network, for data exchange. In a possible implementation, the processor 102 and the processor 112 may separately include an encoder, a decoder, a control word generator, a link training state machine, and other components. In addition, the processor 102 and the processor 112 may optionally include a scrambler, a descrambler, and other components. For more detailed structures of the interface controller 10 and the network interface card 11, refer to related descriptions in FIG. 4A and FIG. 4B.

In embodiments of this application, a communication network model of the electronic device 100 may comply with an open systems interconnection reference model (open systems interconnection reference model, OSI reference model) standard. An OSI reference model may specifically include an application layer (application layer), a transport layer (transport layer), a data link layer (data link layer), and a physical layer (physical layer), and may further include more layers. This is not specifically limited in embodiments of this application. The application layer may include application software, for example, a video play application and an instant messaging application, running in the CPU 12. The transport layer is used to describe a transport layer protocol specification of a system, including a definition and arrangement of a data type and a structure, route control, bandwidth management, and the like. The data link layer is used to encapsulate a data packet provided by the transport layer into a data frame, and provide transparent transmission. The physical layer is used to define a link status, a clock reference, data encoding, and a circuit that are of a wired serial link required for data transmission and reception, and provide a standard interface for the data link layer. The physical layer encodes the data frame to generate a bitstream, and transmits the bitstream over the wired serial link. It should be noted that the interface controller 10 and the network interface card 11 provided in embodiments of this application usually work at the physical layer in the OSI standard.

In a running process of the electronic device 100, the processor 102 in the interface controller 10 may obtain an original data packet (for example, the CPU 12 may trigger the processor 102 to read a data packet from the memory 13). The processor 102 processes the obtained data packet (for example, encapsulating the data packet into a data frame and performing Hamming encoding), generates a bitstream, and outputs the bitstream to the network interface card 11 through the interface 101. The interface 111 in the network interface card 11 receives the bitstream, and the processor 112 in the network interface card 11 further processes the received bitstream (for example, obtaining the data frame through decoding, encapsulating the data frame into an Ethernet frame, and performing Manchester encoding), and then transmits the data frame to the network. Similarly, after receiving the data frame from the network, the network interface card 11 may perform processing (for example, performing Manchester decoding, removing the Ethernet frame, and performing Hamming encoding), and then transmit the data frame to the interface controller 10 through the interface 111. After further processing (for example, performing decoding and decapsulation) the obtained data frame, the interface controller 10 generates a data packet, and stores the data packet in the memory 13 or directly provides the data packet for the CPU 12.

In embodiments of this application, to implement signal transmission with a low bit error rate, in addition to data obtained by encoding a data frame, as shown in FIG. 2, a bitstream transmitted by the interface controller 10 (namely, a transmit end) to the network interface card 11 (namely, a receive end) further includes a control word. FIG. 2 schematically shows the bitstream transmitted by the interface controller 10 to the network interface card 11. The control word indicates the link status, the clock reference, a data frame delimiter of the wired serial link, and other information. Therefore, the physical layer of the receive end determines, based on the control word, the data frame delimiter, adjusts the clock reference, adjusts the link status, and the like. The control word includes a start field indicating start location information of the control word, an end field indicating end location information of the control word, and a payload field used to carry indication information. The indication information carried by the payload field indicates link information of the wired serial link.

In a conventional wired serial link, encoding segments are usually used to transmit data between two communication apparatuses, implement link alignment, and transfer various information about the link, and one type of information is one encoding segment. For example, information indicating link power consumption is an encoding segment, and information indicating a status of each circuit in the link is an encoding segment. In other words, there are multiple encoding segments for implementing link alignment. However, with continuous evolution of a working rate at the physical layer and more accurate control on the link, more link information needs to be set to meet requirements. Consequently, an amount of link information is large, that is, a quantity of encoding segments is large, such that a design at the physical layer in the communication apparatus is complex, and physical layer design costs increase. The control word provided in embodiments of this application is set to a structure including the start field, the end field, and the payload field, to carry the link information in the payload field. This can implement that one control word indicates multiple pieces of link information, and simplify a design at the physical layer. In addition, because the end field in the control word indicates the end location information of the control word, that is, the end field in the control word may limit a length of the control word. Further, an amount of link information carried in the control word may be flexibly adjusted by flexibly adjusting the end location information of the control word, to provide flexibility of the control word.

It should be noted that, in the bitstream shown in FIG. 2, data is located on the left side of the control word. In a process of sending the bitstream, a signal of the control word is first sent, and then a data signal is sent. In the implementation shown in FIG. 2, the data may be, for example, service data. Optionally, the data may alternatively be located on the right side of the control word. In a process of sending the bitstream, a data signal is first sent, and then a signal of the control word is sent. In this implementation, the data may be, for example, training data. In addition, because the data and the control word are encoded as "0" and " 1" signals at the physical layer, the control word may alternatively be set at any location of the data.

FIG. 2 further schematically shows a frame structure of the control word. In FIG. 2, the control word includes a start field U_I indicating start location information of the control word, an end field U_END indicating end location information of the control word, and a payload field payload indicating link information of the wired serial link. The following describes the control word in more detail with reference to the frame structure of the control word shown in FIG. 2.

The start field U_I includes at least one group of U_ID0 to U_IDN, namely, multiple bits. In other words, in the frame structure shown in FIG. 2, first N+1 bits are a header of the control word, and the (N+1)-bit header may enable the network interface card 11 to identify the start field of the control word. In an optional implementation of this embodiment of this application, a length of the start field U_I may change within a preset range, to ensure that the control word has a specific fault tolerance capability, and to compensate for a difference between a clock cycle of the transmit end and a clock cycle of the receive end. For example, the start field U_I may include multiple groups of repeated U_ID0 to U_IDN, and a variable length of the start field U_I may be, for example, 8 bytes. It is assumed that N is 4, and U_ID0 to U_IDN are 00101. The start field U_I may be 001010010100101, namely, three groups of repeated code streams.

The interface controller 10 may encode the start field into consecutive "0" "1" signals, and send a bitstream to the network interface card 11 based on a local clock cycle over the wired serial link. After receiving the bitstream, the network interface card 11 first restores a clock cycle of the interface controller 10 from the start field, and then adds at least one group of fields to or deletes at least one group of fields from the multiple groups of same fields based on an offset between the restored clock cycle and the local cycle. Specifically, a buffer queue may be disposed in the network interface card 11, and the network interface card 11 writes, into the buffer queue based on the clock cycle restored from the start field, data carried in the start field. In addition, the network interface card 11 may further read the data from the buffer queue based on the local clock cycle. The two operations are performed simultaneously. When the network interface card 11 detects that a rate of writing the data into the buffer queue is greater than a rate of reading the data from the buffer queue, it indicates that the clock cycle of the interface controller 10 is greater than a clock cycle of the network interface card 11. In this case, one or more groups of U_ID0 to U_IDN in the start field U_I are deleted, to ensure clock cycle synchronization between the interface controller 10 and the network interface card 11. When the network interface card 11 detects that the rate of writing the data into the buffer queue is less than the rate of reading the data from the buffer queue, it indicates that the clock cycle of the interface controller 10 is less than the clock cycle of the network interface card 11. In this case, one or more groups of U_ID0 to U_IDN are added to the start field U_I, to implement clock cycle synchronization between the interface controller 10 and the network interface card 11.

The end field U_END indicates the end location information of the control word. The end location information may be, for example, a length or an end location of the control word. The end location may be, for example, a location after a preset quantity of bits starting from the end field U_END. Therefore, after identifying the end field U_END from the control word, the network interface card 11 may count a preset quantity of bits backwards from the end field, to determine that a code stream of the control word ends.

In this possible implementation, the control word may be followed by data content. In other words, the start field and the end field in the control word may be used as a frame header of the data frame. After identifying the start field and the end field in the control word, the receive end may determine a start location (namely, a frame delimiter) of the data, to read the data from the bitstream. In embodiments of this application, the start field and the end field in the control word are used as the frame header of the data frame, so that the frame header of the data frame does not need to be additionally set. This can simplify a design of a bitstream.

The payload field payload is used to carry the link information. The link information may include but is not limited to one or more of the following: a clock cycle for adding a control word to data, a power consumption status of hardware in a link, a working status of a circuit in a link, and an output gain of a codec circuit used in a link. For example, the power consumption status of the hardware in the link includes, for example, three statuses: low power consumption, medium power consumption, and high power consumption. When hardware such as a scrambler and a data distributor included in the link is in one of the following modes: standby, sleep, or power-off, the hardware in the link is in a low power consumption state. When a portion of the hardware included in the link is in one of the following modes: standby, sleep, or power-off, and another portion of the hardware is in a working state, the hardware in the link is in a medium power consumption state. When all components in the link are in a working state, the hardware in the link is in a high power consumption state. For example, when transmitted data is training data, it may indicate that power consumption of each piece of hardware in the link is low power consumption. When the transmitted data is service data, it may indicate that power consumption of each piece of hardware in the link is medium power consumption or high power consumption. A working status of the circuit in the link may include, for example, a power-on state or a power-off state. For example, when the transmitted data is training data, a status of a codec circuit may be a power-off state. When the transmitted data is service data, a status of the codec circuit may be a power-on state. Gains of a codec in the link include, for example, a gain 1, a gain 2, and a gain 3.

In an optional implementation, the payload field payload may include two parts: a type (type) field and a detail (detail) field. The type field indicates various types of link information, and the detail field indicates a specific parameter corresponding to each type of link information. For example, the link information includes the power consumption status of the hardware in the link, the working status of the circuit in the link, or the gain of the codec in the link. The type field indicates that the link information includes the power consumption status of the hardware in the link and the gain of the codec in the link. The detail field further indicates that the power consumption status of the hardware in the link is a medium power consumption state and the gain of the codec in the link is the gain 2. Therefore, the network interface card 11 may determine, based on the type field and the detail field, the link information and parameters corresponding to the link information, to adjust the link.

In this embodiment of this application, the wired serial link used to transmit a bitstream between the interface controller 10 and the network interface card 11 may include one lane (lane) or may include multiple lanes based on bandwidth of the wired serial link. In other words, the bitstream may be transmitted between the interface controller 10 and the network interface card 11 through one lane, or the bitstream may be transmitted through multiple lanes. When the interface controller 10 transmits the bitstream to the network interface card 11 through the multiple lanes, in an optional implementation, in addition to data, the bitstream transmitted through each lane further includes a control word. In addition to the foregoing fields, each control word may further include a lane identifier field Lane indicating a link number, as shown in FIG. 2. The network interface card 11 may implement lane reversal based on the lane identifier field Lane, and may further cancel data skew between data transmitted through lanes. Further, the interface controller 10 may transmit the bitstream to the network interface card 11 through a fixed quantity of lanes, or may transmit the bitstream to the network interface card 11 through a variable quantity of lanes. When the interface controller 10 transmits the bitstream to the network interface card 11 through the variable quantity of lanes, in an optional implementation, the link information carried in the payload field payload may further include link bandwidth (namely, a quantity of lanes for transmitting the bitstream). The network interface card 11 may receive the bitstream from a corresponding lane based on the link information.

In conclusion, it can be learned that, in the control word, the start field, the end field, and the payload field are set, and the lane identifier field is optionally set, so that the control word can indicate more information. This reduces complexity of the control word transmitted at the physical layer.

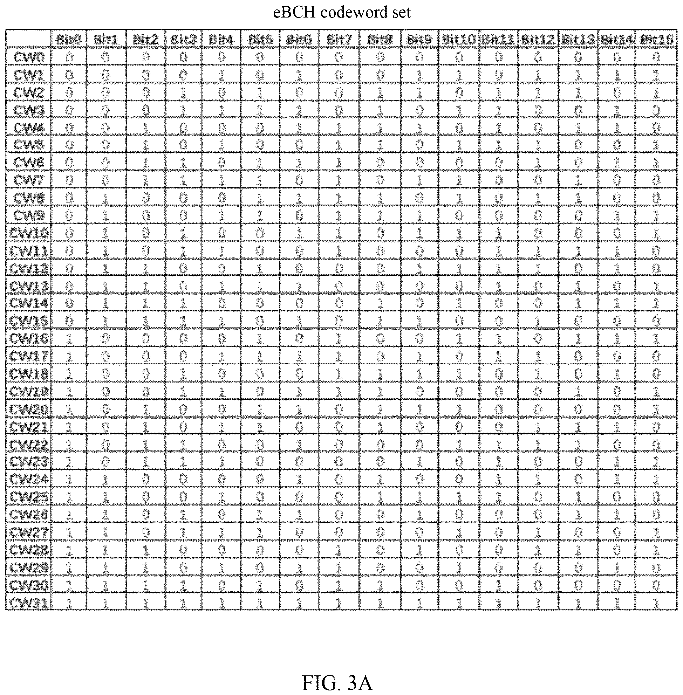

Based on the foregoing frame structure of the control word, in a possible implementation, in embodiments of this application, the control word may be encoded in an error correction encoding scheme. The interface controller 10 sends a correctable code. The network interface card 11 can automatically discover errors, and can automatically correct the errors in codeword transmission. Error correction encoding may include, for example, but is not limited to, forward error correction encoding, Hamming encoding, and eBCH (extended Bose-Chaudhuri-Hocquenghem) encoding. A Hamming code is a linear code. For a code block whose length is m bits, there are n redundant bits, and remaining bits are payload bits. Each redundant bit is obtained by performing an exclusive OR operation on some payload bits in a specific manner. Hamming code encoding can correct any single-bit error. An eBCH code is also a linear code, and eBCH encoding can correct multiple bit errors in a code block. The following uses eBCH encoding as an example to describe in detail a control word encoding method by using a specific example. In embodiments of this application, an eBCH code set may be first constructed. For example, the eBCH code set may include 32 codes, and a structure of each code may be BCH (16, 5, 1), where 16 (bits) is a coding length, 5 (bits) is a payload length, and 1 (bit) is a check coding length. A Hamming distance between any two codes in the eBCH code set is 8. In other words, a quantity of different bits between any two codes is 8. An eBCH codeword set is shown in FIG. 3A.

It can be seen from FIG. 3A that the eBCH codeword set includes 32 codes: CW0 to CW31, and a length of each code is 16 bits. A quantity of different bits between any two codes is 8. Based on the eBCH code constructed in FIG. 3A, a specific instance of the control word in this embodiment of this application is shown in Table 1.

**Table 1 Instance of a control word**

| Symbol number | Description |
|---|---|
| 0 to (4*N-1), where N ranges from 1 to 5 | Control word start field: CW21 and CW28 |
| 4*N to (4*N+3) | Control word end field: CW22 and CW8 |
| (4*N+4) to (4*N+1 1) | Lane identifier field. For details, refer to FIG. 3B |
| (4*N+12) to (4*N+19) | payload_type field. For details, refer to Table 2 |
| (4*N+20) to (4*N+27) | payload_detail field. For details, refer to Table 3 |

It can be learned from the instance of the control word shown in Table 1 that one control word includes (4*N+27) bytes: a byte 0 to a byte (4*N+27). A quantity of bytes of the control word start field may range from 4 to 20. Codes of the control word start field are CW21 and CW28. In other words, 16 low-order bits of the control word start field are the code CW28 shown in Table 1, and 16 high-order bits are the code CW21 shown in Table 1. Codes of the control word end field are CW22 and CW8. In other words, 16 low-order bits of the control word end field are the code CW22 shown in Table 1, and 16 high-order bits are the code CW8 shown in Table 1.

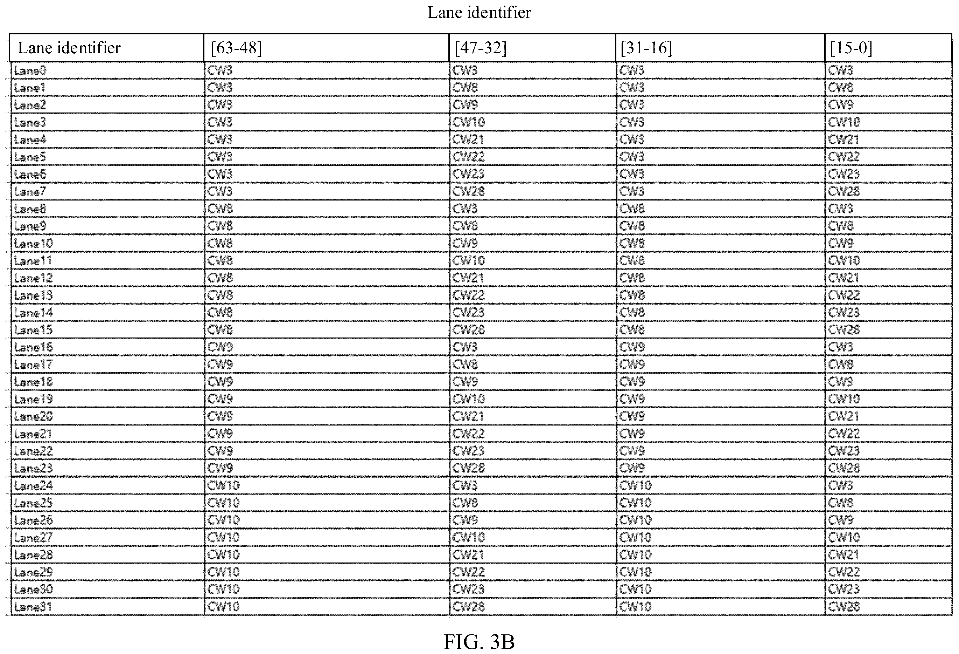

The lane identifier field is shown in FIG. 3B. It is assumed that maximum link bandwidth between the interface controller 10 and the network interface card 11 is 32 lanes lane, namely, a lane 0 to a lane 31 shown in FIG. 3B. In this case, an identifier of each lane may be represented by four codes, namely, 64 bits. A lane 2 shown in FIG. 3B is used as an example. It can be seen from FIG. 3B that the lane 2 is indicated by four codes: CW3, CW9, CW3, and CW9. For specific bits of CW3 and CW9, refer to Table 1. It can further be seen from FIG. 3B that, in the 64 bits, bits [0 to 15] are CW3, bits [16 to 31] are CW9, bits [32 to 47] are CW3, and bits [48 to 63] are CW9. For detailed codes of other lanes, refer to FIG. 3A and FIG. 3B. Details are not described.

It should be noted that Table 1, Table 2, Table 3, and tables shown in FIG. 3A and FIG. 3B may be separately pre-stored in the interface controller 10 and the network interface card 11.

**Table 2 Payload type (payload_type)**

| Link information | Bits [31 to 16] | Bits [15 to 0] |
|---|---|---|
| FEC gain | CW8 | CW10 |
| Link bandwidth | CW10 | CW22 |
| Power consumption of hardware | CW8 | CW13 |
| Control word adding period | CW10 | CW15 |

**Table 3 Payload detail (payload_detail)**

| Link information | Link detail information | Bits [31 to 16] | Bits [15 to 0] |
|---|---|---|---|
| FEC gain | Bypass FEC | CW3 | CW9 |
| | FEC gain 1 | CW9 | CW10 |
| | FEC gain 2 | CW9 | CW21 |
| | FEC gain 3 | CW10 | CW22 |
| Link bandwidth | X0 (service data ends) | CW3 | CW9 |
| | X1 (one lane) | CW8 | CW10 |
| | X2 (two lanes) | CW9 | CW21 |
| | X4 (four lanes) | CW11 | CW22 |
| | X8 (eight lanes) | CW21 | CW23 |
| | X16 (16 lanes) | CW22 | CW28 |
| | X32 (32 lanes) | CW28 | CW8 |
| Power consumption of hardware | Lp0 | CW3 | CW9 |
| | Lp1 | CW8 | CW10 |
| | Lp1.1 | CW9 | CW21 |
| | Lp1.2 | CW10 | CW22 |
| | Lp2 | CW21 | CW23 |
| | Enter an electrical idle state | CW22 | CW28 |
| Control word adding period | Period 0 | CW3 | CW9 |
| | Period 1 | CW8 | CW10 |
| | Period 2 | CW9 | CW21 |

It can be seen from Table 2 that the link information includes four types of information: the forward error correction (forward error correction, FEC) encoder gain, the link bandwidth, the power consumption of the hardware, and the control word adding period. Each type of information is indicated by two codes (namely, 32 bits). Table 2 shows that codes of the FEC gain are CW8 and CW10, that is, in the 32 bits that indicate the FEC gain, 16 low-order bits are CW10, and 16 high-order bits are CW8. The FEC gain further includes four modes: the bypass FEC, the FEC gain 1, the FEC gain 2, and the FEC gain 3 shown in Table 3. It is assumed that the type field in the control word transmitted by the interface controller 10 to the network interface card 11 includes CW8 and CW10, and the detail field includes CW9 and CW10. After receiving the bitstream, the network interface card 11 obtains the type field and the detail field of the control word through parsing. The network interface card 11 finds, from Table 2, that CW8 and CW10 indicate the FEC gain. Then, the network interface card 11 further compares CW3 and CW9 with the codes corresponding to the FEC gain in Table 3, and finds that the FEC gain is the FEC gain 1. In this case, the network interface card 11 may adjust the FEC gain to the gain 1.

Table 2 shows that codes of the link bandwidth are CWlO and CW22, that is, in the 32 bits that indicate the link bandwidth, 16 low-order bits are CW10, and 16 high-order bits are CW22. The link bandwidth further includes seven modes: X0, X1, X2, X4, X8, X16, and X32 shown in Table 3. It is assumed that in the type field in the control word transmitted by the interface controller 10 to the network interface card 11, first 32 bits are CW8 and CW10, and last 32 bits are CW10 and CW22; and in the detail field, first 32 bits are CW9 and CW10, and last 32 bits are CW9 and CW21. After receiving the bitstream, the network interface card 11 finds, through parsing, that the first 32 bits of the type field in the control word indicate the FEC gain, and the last 32 bits indicate the link bandwidth. Then, the network interface card 11 compares the first 32 bits of the detail field with the information corresponding to the FEC gain in Table 3, and compares the last 32 bits of the detail field with the information corresponding to the link bandwidth in Table 3, to find that the FEC gain is the FEC gain 1 and the link bandwidth is X1. In this case, the network interface card 11 may adjust the FEC gain to the gain 1, and obtain data through one lane. It should be noted that a lane used in each link bandwidth may further be pre-agreed upon between the physical layer of the interface controller 10 and the physical layer of the network interface card 11. For example, it may be pre-agreed upon that when one lane is used to transmit service data, the service data is transmitted through a lane whose lane identifier is lane0. Alternatively, it may be pre-agreed upon that when four lanes are used to transmit service data, the service data is transmitted over lanes whose lane identifiers are lane0 to lane3. It should further be noted that, when the type field of the control word indicates the link bandwidth information, and the detail field is the code CW3 and the code CW9, it indicates that transmission of the service data by the interface controller 10 to the network interface card 11 ends, and data transmitted in a next period is training data. In other words, when the information indicating the link bandwidth in the control word is X0, it indicates that transmission of the service data ends, and data transmitted in the next period is the training data. When the information indicating the link bandwidth in the control word is any one piece of information other than X0, it indicates that the data transmitted by the interface controller 10 to the network interface card 11 is the service data. Therefore, the code indicating the link bandwidth may further indicate switching between the service data and the training data.

When the control word transmitted by the interface controller 10 to the network interface card 11 includes the information indicating the power consumption of the hardware and the control word adding period, parsing of the control word by the network interface card 11 and how to determine the link information that needs to be adjusted are similar to those of the FEC encoder gain and the link bandwidth. Details are not described again.

Based on the structure of the electronic device 100 shown in FIG. 1 and the frame structure of the control word shown in FIG. 2, FIG. 4A and FIG. 4B are a diagram of a structure of hardware at the physical layer of the interface controller 10 according to an embodiment of this application. It should be noted that a structure of hardware at the physical layer of the network interface card 11 may be the same as the structure of the hardware at the physical layer of the interface controller 10. In this embodiment of this application, the hardware at the physical layer of the interface controller 10 is used as an example for description. As shown in FIG. 4A and FIG. 4B, the physical layer of the interface controller 10 includes an encoder 101, a data distributor 102, a control word generator 103, a multiplexer 104, a link training state machine 105, a scrambler 106, a serializer/deserializer 107, a descrambler 108, a control word decoder 109, a data skew canceler 1010, and a decoder 1011. It may be understood that the physical layer of the interface controller 10 may further include more circuits, modules, or components. This is not specifically limited in this embodiment of this application. The components included in the physical layer of the interface controller 10 may be integrated into one or more chips. The components may be implemented by using a hardware circuit, or some components may be implemented by using hardware driven by software. In a possible implementation, some components may be integrated into a same processor, and the processor performs functions corresponding to the components or modules. For example, the encoder 101 and the data distributor 102 may be integrated into a same processor, and the processor implements data encoding and allocation functions. In addition, the physical layer of the network interface card 11 may have a component same as or similar to the interface controller 10. As shown in FIG. 4A and FIG. 4B, the physical layer of the network interface card 11 includes an encoder 111, a data distributor 112, a control word generator 113, a multiplexer 114, a link training state machine 115, a scrambler 116, a serializer/deserializer 117, a descrambler 118, a control word decoder 119, a data skew canceler 1110, and a decoder 1111. The following describes components or functions of physical layers of the interface controller 10 and the network interface card 11 by using an example in which the physical layer of the interface controller 10 transmits a bitstream to the physical layer of the network interface card 11.

At the physical layer of the interface controller 10, the encoder 101 is configured to encode a data frame sent at a data link layer, to generate encoded data. The encoding may be, for example, forward error encoding, error detection and retransmission encoding, or hybrid error correction encoding. The data distributor 102 is configured to divide the encoded data into multiple data streams (which are referred to as service data below), and allocate the multiple data streams to multiple lanes, where one lane corresponds to one piece of data. The link training state machine 105 is configured to generate link information, and provide the generated link information for the control word generator 103. The control word generator 103 generates a control word based on the link information and the frame structure of the control word shown in FIG. 2. The link information may include, for example, a link power consumption status, a link output gain, and a link encoding mode. In addition, the link training state machine 105 is further configured to control, based on a current status (for example, a service data transmission state, a link training state, or a link reset state) and a clock cycle, the multiplexer 104 to selectively form a path between one of multiple input ends and an output end. FIG. 4A and FIG. 4B show that the multiplexer 104 includes three input ends. One input end is coupled to the data distributor 102, one input end is configured to input training data, and the other input end is coupled to the control word generator 103. In other words, the multiplexer 104 outputs one of the service data, the training data, or the control word to the scrambler 106 under control of the link training state machine 105. It should be noted that the service data in this embodiment of this application may be, for example, data generated after data such as audio data and video data that are input by a user by using an application program is encapsulated and encoded at an application layer, a transport layer, a data link layer, and a physical layer. The training data is used to test and adjust the multiple lanes in a link training phase. The scrambler 106 scrambles the received data stream or control word, and provides a scrambled data stream for the serializer/deserializer 107. The serializer/deserializer 107 converts the received plurality of parallel low-speed bitstreams into high-speed serial bitstreams, and transmits the high-speed serial bitstreams to the network interface card 11 through the multiple lanes. It should further be noted that a quantity of lanes is the same as a quantity of transmitted bitstreams, and each bitstream includes data and a control word. Under control of the link training state machine 105, the control word may be added at any location of corresponding data. Preferably, the control word may be added before the data.

At the physical layer of the network interface card 11, the serializer/deserializer 117 receives the serial bitstream signal over the lanes, converts the serial bitstreams into multiple parallel bitstreams, and provides the multiple parallel bitstreams for the descrambler 118. The descrambler 118 descrambles the multiple parallel bitstreams, and outputs a descrambled bitstream to the control word decoder 119. Based on the frame structure of the control word shown in FIG. 4A and FIG. 4B, the control word decoder 119 identifies the control word from each bitstream, and parses the control word, to obtain indication information in a payload field. The indication information indicates the link information. For example, the indication information indicates that a link enters a medium power consumption state and indicates that the link encoding mode is a forward error encoding mode. The control word decoder 119 provides the obtained indication information for the link training state machine 115, and provides the data and a lane identifier corresponding to each piece of data to the data skew canceler 1110. The link training state machine 115 performs a corresponding action based on the indication information. For example, the link is set to the medium power consumption state, and the encoding mode (for example, the forward error encoding mode) is provided for the decoder 1111. The data skew canceler 1110 performs skew canceling on the data streams, and provides data streams on which skew canceling is performed for the decoder 1111. The decoder 1111 decodes the data streams based on the encoding mode in a corresponding decoding mode, and provides decoded data for a data link layer of the network interface card 11.

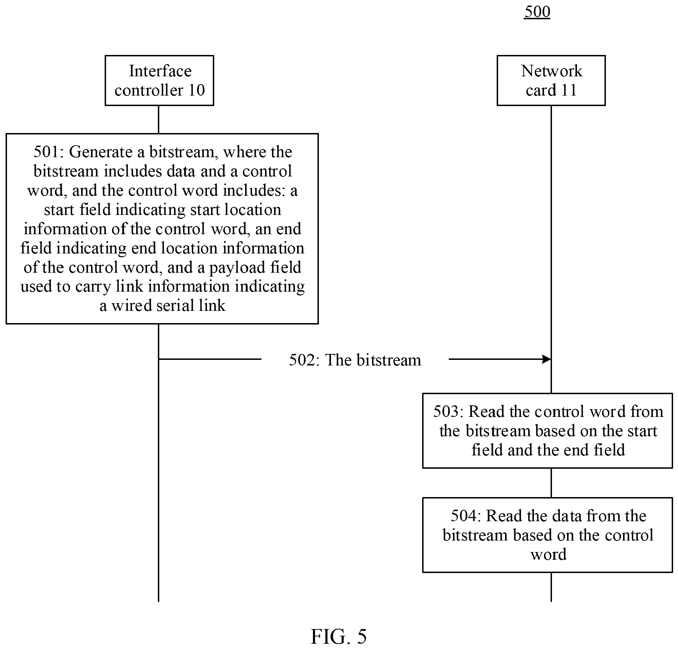

Based on the architecture of the electronic device 100 shown in FIG. 1, the frame structure of the control word shown in FIG. 2, and the architecture of the hardware at the physical layer of the interface controller 10 (or the network interface card 11) shown in FIG. 4A and FIG. 4B, an embodiment of this application further provides a data transmission method. The data transmission method may be used in the electronic device 100 shown in FIG. 1. The following describes the data transmission method provided in embodiments of this application by using an example in which the interface controller 10 is a transmit end and the network interface card 11 is a receive end. In the data transmission method provided in embodiments of this application, the transmit end and the receive end of the data transmission method may be implemented by one or more components shown in FIG. 2. It should be noted that, in this embodiment of this application, the interface controller 10 may transmit a control word to the network interface card 11 in any data transmission phase. For example, the control word may be added to training data transmitted in a link training phase, the control word may be added to service data transmitted in a service data transmission phase, or the control word may be added to training data transmitted in a link reset phase. It should further be noted that the control word may be set before the service data, may be set at any location of the service data based on a clock cycle, may be set before the training data, or may be set after the training data. This is not specifically limited in this embodiment of this application. FIG. 5 shows a procedure 500 of a data transmission method according to an embodiment of this application. The data transmission method includes the following steps.

Step 501: An interface controller 10 generates a bitstream, where the bitstream includes data and a control word, and the control word includes: a start field indicating start location information of the control word, an end field indicating end location information of the control word, and a payload field used to carry link information indicating a wired serial link. Step 502: The interface controller 10 sends the bitstream over the wired serial link.

Step 503: A network interface card 11 reads the control word from the bitstream based on the start field and the end field. Step 504: Read the data from the bitstream based on the control word.

In this implementation, the data may be, for example, either service data or training data. The control word is, for example, a structure shown in FIG. 2. The link information may include but is not limited to one or more of the following: a clock cycle for adding a control word to data, a power consumption status of hardware in a link, a working status of a circuit in a link, and an output gain of a codec circuit used in a link.

In this implementation, the start field and the end field of the control word may indicate a length of the control word. For example, after reading the start field, the network interface card 11 identifies that the bitstream includes the control word. After reading the end field, the network interface card 11 identifies that a location after a preset quantity of bits starting from the field is an end location of the control word. In addition, the control word may be followed by data content of the data. In other words, the start field and the end field in the control word may be used as a frame header of a data frame. After identifying the start field and the end field in the control word, the receive end may determine a start location of the data, to read the data from the bitstream.

The control word provided in embodiments of this application is set to a structure including the start field, the end field, and the payload field, to carry the link information in the payload field. This can implement that one control word indicates multiple pieces of link information, and simplify a design at a physical layer. In addition, because the end field in the control word indicates the end location information of the control word, that is, the end field in the control word may limit the length of the control word. Further, an amount of link information carried in the control word may be flexibly adjusted by flexibly adjusting the end location information of the control word, to provide flexibility of the control word.

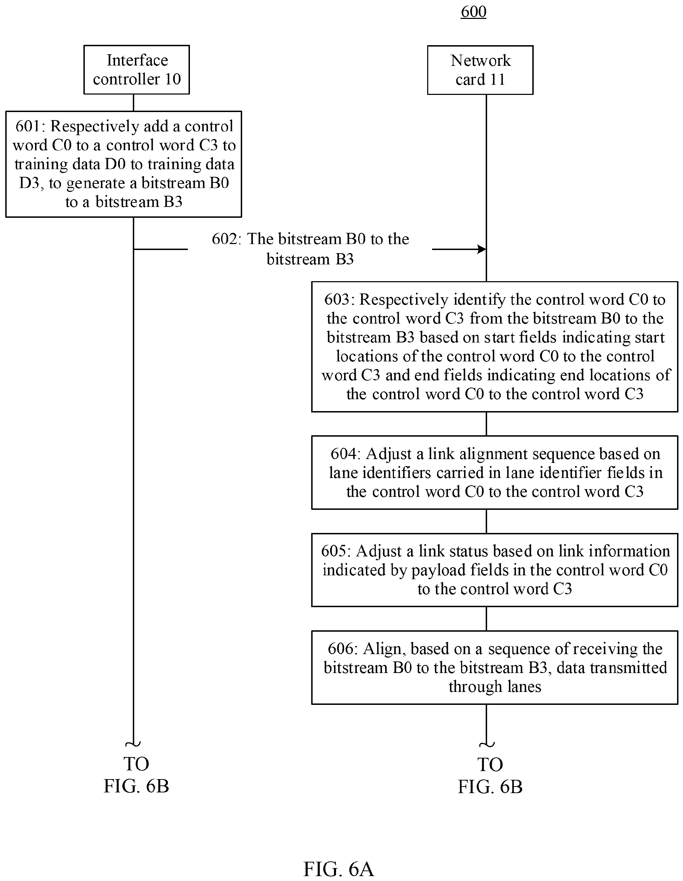

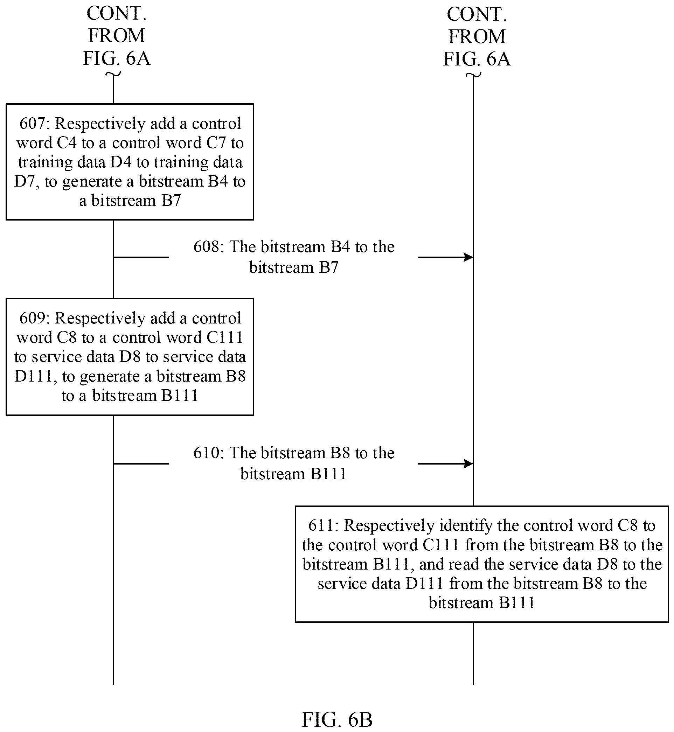

With reference to FIG. 6A and FIG. 6B, the following describes the data transmission method provided in embodiments of this application by using a more specific scenario and examples in which the bitstream includes the training data and the control word, and the bitstream includes the service data and the control word, and an example in which the interface controller 10 transmits data to the network interface card 11 over four lanes. FIG. 6A and FIG. 6B show a procedure 600 of a data transmission method according to an embodiment of this application. The data transmission method includes the following steps.

Step 601: An interface controller 10 respectively adds a control word C0 to a control word C3 to training data D0 to training data D3, to generate a bitstream B0 to a bitstream B3. This step is in a link training phase. The link training phase is used to align a link status of the interface controller 10 with a link status of a network interface card 11. In this step, the interface controller 10 may allocate the preset training data D0 to D3 to a lane 0 to a lane 3. The interface controller 10 may further generate the control word C0 to the control word C3 based on current link information (for example, a link enters a medium power consumption state, each hardware circuit at the physical layer is in a power-on state, a gain of a link encoder at the physical layer is "1", and a link encoding mode is forward error encoding), a clock cycle for adding a control word to training data, and the frame structure of the control word shown in FIG. 2. A lane identifier field of the control word C0 indicates the lane 0, a lane identifier field of the control word C1 indicates the lane 1, a lane identifier field of the control word C2 indicates the lane 2, and a lane identifier field of the control word C3 indicates the lane 3. In addition, data carried in start fields, end fields, and payload fields in the control word C0 to the control word C3 may be the same. Then, the interface controller 10 respectively adds the control word C0 to the control word C3 to the training data D0 to the training data D3, to generate the bitstream B0 to the bitstream B3. Step 602: The interface controller 10 simultaneously transmits the bitstream B0 to the bitstream B3 to the network interface card 11 through the lane 0 to the lane 3 respectively.

Step 603: The network interface card 11 respectively identifies the control word C0 to the control word C3 from the bitstream B0 to the bitstream B3 based on start fields indicating start locations of the control word C0 to the control word C3 and end fields indicating end locations of the control word C0 to the control word C3. Step 604: The network interface card 11 adjusts a link alignment sequence based on lane identifiers carried in lane identifier fields in the control word C0 to the control word C3. This step is used for alignment of link numbers with a data stream sequence. For example, the interface controller 10 respectively transmits the bitstream B0-B1-B2-B3 through the lane 0-lane 1-lane 2-lane 3, and data streams received by the network interface card 11 from the lane 0-lane 1-lane 2-lane 3 are actually B3-B2-B1-B0. In other words, lane numbers in the interface controller 10 are completely reverse to lane numbers in the network interface card 11. The network interface card 11 may re-mark the lane numbers in the network interface card 11 based on lane identifier fields in the control words, to implement alignment with the lane numbers in the interface controller 10. Step 605: The network interface card 11 adjusts the link status based on link information indicated by payload fields in the control word C0 to the control word C3. For example, the link information indicates that the link enters a medium power consumption state, each hardware circuit at the physical layer is in a power-on state, and the gain of the link encoder at the physical layer is "1". Based on the link information, the network interface card 11 adjusts a power consumption status of a hardware circuit such as an amplifier and an encoder in the link to a medium power consumption state, adjusts the gain of the link encoder to "1", and the like. Step 606: The network interface card 11 aligns, based on a sequence of receiving the bitstream B0 to the bitstream B3, data transmitted through the lanes.

Step 607: The interface controller 10 respectively adds a control word C4 to a control word C7 to training data D4 to training data D7, to generate a bitstream B4 to a bitstream B7, where payload fields of the control word C4 to the control word C7 carry indication information indicating transmission of service data in a next period. This step is in the link training phase. After the interface controller 10 adds the link information to the payload field and provides the payload field for the network interface card 11 in step 601, the interface controller 10 may further add the indication information indicating transmission of service data in a next period to the payload fields of the control word C4 to the control word C7. The payload fields of the control word C4 to the control word C7 may further include the link information described in step 601. In addition, the control word C4 to the control word C7 further include start fields, end fields, and lane identifier fields. The interface controller 10 respectively adds the control word C4 to the control word C7 to the training data D4 to the training data D7, to generate the bitstream B4 to the bitstream B7. Step 608: The interface controller 10 simultaneously transmits the bitstream B4 to the bitstream B7 to the network interface card 11 through the lane 0 to the lane 3 respectively.

Step 609: The interface controller 10 respectively adds a control word C8 to a control word C111 to service data D8 to service data Dill, to generate a bitstream B8 to a bitstream Bill. In this step, the interface controller 10 may obtain the data frame at the data link layer. Based on a preset encoding format (for example, a forward error encoding format), the interface controller 10 encodes the data frame, to generate service data D8 to D11. Then, the interface controller 10 may allocate the service data D8 to D11 to the lane 0 to the lane 3. Then, the interface controller 10 generates the control word C8 to a control word C11 based on current link information, a quantity of used lanes, a clock cycle for adding a control word to training data, and the frame structure of the control word shown in FIG. 2. The quantity of used lanes is carried in the payload fields of the control word C8 to the control word C11. Finally, the interface controller 10 respectively adds the control word C8 to the control word C111 to the training data D8 to the training data D111, to generate the bitstream B8 to the bitstream B111. In an optional implementation, the control word C8 to the control word C111 may be respectively added to preset locations of the service data D8 to the service data D111. The preset location may be, for example, before the service data. Step 610: The interface controller 10 simultaneously transmits the bitstream B8 to the bitstream B111 to the network interface card 11 through the lane 0 to the lane 3 respectively.

Step 611: The network interface card 11 respectively identifies the control word C8 to the control word C111 from the bitstream B8 to the bitstream B111 and reads the service data D8 to the service data D111 from the bitstream B8 to the bitstream B111 based on start fields indicating start locations of the control word C8 to the control word C111 and end fields indicating end locations of the control word C8 to the control word C111. In this step, the network interface card 11 may perform frame delimitation on the service data based on a location of the control word in the bitstream, that is, determine a start location of the service data. In an optional implementation, a location of the service data in the bitstream is a preset location after the control word. For example, a second bit after an end bit of the control word is a start bit of the service data. After reading the end field of the control word, the network interface card 11 may determine the end bit of the control word, so that the network interface card 11 may read the service data from the second bit after the end bit of the control word. Step 612: The network interface card 11 decodes the read service data D8 to D111 based on the encoding format used by the interface controller 10, to obtain a decoded data frame.

It should be noted that the procedure 600 of the data transmission method is an example. It may be understood that the data transmission method provided in embodiments of this application may include more or fewer procedures than the procedure 600. For example, before step 604 and after step 603, the network interface card 11 may further transmit, to the interface controller 10, information indicating that link setting completes. For another example, before step 604 and after step 603, the network interface card 11 may further send a bitstream to the interface controller 10. The bitstream includes training data and a control word added to the training data, and the control word indicates a link status of the physical layer of the network interface card 11.

It may be understood that, to implement the foregoing functions, the interface controller includes corresponding hardware and/or a software module for performing the functions. With reference to the steps of each example described in embodiments disclosed in this specification, this application may be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each specific application with reference to embodiments. However, it should not be considered that the implementation goes beyond the scope of this application.

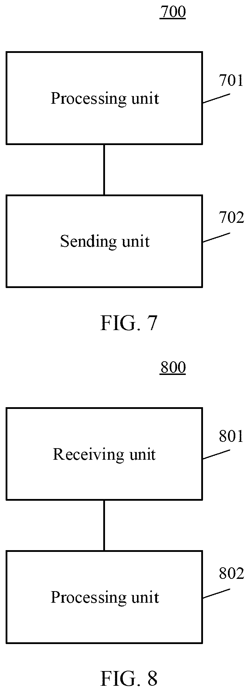

In embodiments, the components included in the interface controller 10 shown in FIG. 1 may be divided into functional modules based on the foregoing method examples. For example, components corresponding to the functions may be divided, or two or more components with functions may be integrated into one processing module. The integrated processing module may be implemented in a form of hardware. It should be noted that, in embodiments, division into modules is an example, and is merely logical function division. During actual implementation, another division manner may be used. When an integrated module is used, FIG. 7 is a possible diagram of a data transmission apparatus 700. As shown in FIG. 7, the data transmission apparatus 700 may include a processing unit 701 and a sending unit 702. The foregoing apparatus may further be extended. The processing unit 701 is configured to generate a bitstream, where the bitstream includes data and a control word, and the control word includes: a first field indicating start location information of the control word, a second field indicating end location information of the control word, and a third field used to carry link information indicating a wired serial link. The sending unit 702 is configured to send the bitstream over the wired serial link.

In a possible implementation, the link information includes at least one of the following: a quantity of lanes for transmitting a bitstream, a power consumption status of hardware in a link, a working status of a circuit in a link, or a gain of a codec used in a link.

In a possible implementation, the first field and the second field indicate a receive end to perform frame delimitation on the data.

In a possible implementation, there are multiple bitstreams, there are multiple lanes over the wired serial link, and the multiple bitstreams one-to-one correspond to the multiple lanes. The sending unit 702 is specifically configured to send the corresponding plurality of streams through the multiple lanes.

In a possible implementation, the control word further includes a fourth field indicating a lane number.

In a possible implementation, the first field includes multiple groups of same fields, and each group of fields includes multiple bits. The multiple groups of same fields are used to compensate for a difference between a clock cycle of the transmit end and a clock cycle of the receive end.

The data transmission apparatus 700 provided in this embodiment is used in the data transmission method performed by the interface controller 10, and can achieve same effect as the foregoing implementation method or apparatus. Specifically, the modules corresponding to FIG. 7 may be implemented by software, hardware, or a combination thereof. For example, each module may be implemented in a form of software, correspond to the processor 102 and the interface 101 that correspond to the module in FIG. 1, and is configured to drive the corresponding component to work. Alternatively, each module may include two parts: a corresponding component and corresponding driver software, that is, implemented by using a combination of software and hardware. Therefore, it may be considered that the data transmission apparatus 700 logically includes the interface controller 10 shown in FIG. 1 and FIG. 4A and FIG. 4B, and each module includes at least a driver software program of a corresponding function. Details are not described in this embodiment.

In embodiments, the components included in the network interface card 11 shown in FIG. 1 may be divided into functional modules based on the foregoing method examples. For example, components corresponding to the functions may be divided, or two or more components with functions may be integrated into one processing module. The integrated processing module may be implemented in a form of hardware. It should be noted that, in embodiments, division into modules is an example, and is merely logical function division. During actual implementation, another division manner may be used. When an integrated module is used, FIG. 8 is a possible diagram of a data transmission apparatus 800. As shown in FIG. 8, the data transmission apparatus 800 may include receiving unit 801 and a processing unit 802. The foregoing apparatus may further be extended. The receiving unit 801 is configured to receive a bitstream, where the bitstream includes data and a control word, and the control word includes: a first field indicating start location information of the control word, a second field indicating end location information of the control word, and a payload field used to carry link information indicating a wired serial link. The processing unit 802 is configured to read the control word from the bitstream based on the first field and the second field, and read the data from the bitstream based on the control word.

In a possible implementation, the processing unit 802 is further configured to adjust, based on the link information, at least one of the wired serial link: a power consumption status of hardware in a link, a working status of a circuit in a link, or a gain of a codec used in a link.

In a possible implementation, the processing unit 802 is specifically configured to: determine a coding length of the control word based on the first field and the second field; identify a frame start location of the data from the bitstream based on the coding length of the control word, where the frame start location of the data is located after the control word; and read the data based on the frame start location of the data.

In a possible implementation, there are multiple bitstreams, there are multiple lanes over the wired serial link, the multiple bitstreams are received from a transmit end through the multiple corresponding lanes, the link information further includes a quantity of lanes for transmitting the multiple bitstreams, and the control word further includes a lane identifier field indicating a lane number. The processing unit 802 is specifically configured to read, based on the quantity of lanes for transmitting the bitstreams and the lane identifier field, the data from the bitstream received through a corresponding lane.

In a possible implementation, the processing unit 802 is further configured to cancel data skew between the multiple lanes based on a sequence of the multiple received bitstreams and a lane identifier field in each of multiple control words in the multiple bitstreams.

In a possible implementation, the first field includes multiple groups of same fields, and each group of fields includes multiple bits. The processing unit 802 is further configured to perform, based on a clock frequency offset between the data transmission apparatus and the transmit end, one of the following operations: deleting at least one group of fields from the multiple groups of same fields, or adding at least one group of fields to the multiple groups of same fields.

The data transmission apparatus 800 provided in this embodiment is used in the data transmission method performed by the network interface card 11, and can achieve same effect as the foregoing implementation method or apparatus. Specifically, the modules corresponding to FIG. 8 may be implemented by software, hardware, or a combination thereof. For example, each module may be implemented in a form of software, correspond to the interface 111 and the processor 112 that correspond to the module in FIG. 1, and is configured to drive the corresponding component to work. Alternatively, each module may include two parts: a corresponding component and corresponding driver software, that is, implemented by using a combination of software and hardware. Therefore, it may be considered that the data transmission apparatus 500 logically includes the network interface card 11 shown in FIG. 1 and FIG. 4A and FIG. 4B, and each module includes at least a driver software program of a corresponding function. Details are not described in this embodiment.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application. However, it should not be considered that the implementation goes beyond the scope of this application.

In the several embodiments provided in this application, it should be understood that the disclosed system and apparatus may be implemented in another manner. For example, the apparatus embodiment described above is merely an example. For example, division into units is merely logical function division, and another division manner may be used during actual implementation. For example, multiple units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

Units described as separate parts may or may not be physically separate, and parts displayed as units may or may not be physical units, may be located in one position, or may be distributed on multiple network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium or memory includes any medium that can store program code, for example, a USB flash drive, a removable hard disk, a ROM, a RAM, a magnetic disk, or an optical disc.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements are made to some or all technical features thereof, without departing from the scope of the technical solutions of embodiments of this application.

## Claims

1. A data transmission method over a wired serial link, applied at a transmit end, and comprising:
generating a bitstream, wherein the bitstream comprises data and a control word, and the control word comprises: a first field indicating start location information of the control word, a second field indicating end location information of the control word, and a third field used to carry link information indicating a wired serial link; and
sending the bitstream over the wired serial link.

2. The data transmission method according to claim 1, wherein the link information comprises at least one of the following: a quantity of lanes for transmitting a bitstream, a power consumption status of hardware in a link, a working status of a circuit in a link, or a gain of a codec used in a link.

3. The data transmission method according to claim 1 or 2, wherein the first field and the second field indicate a receive end to perform frame delimitation on the data.

4. The data transmission method according to any one of claims 1 to 3, wherein there are multiple bitstreams, there are multiple lanes over the wired serial link, the multiple bitstreams one-to-one correspond to the multiple lanes, and the sending the bitstream over the wired serial link specifically comprises:
sending the corresponding plurality of streams through the multiple lanes.

5. The data transmission method according to claim 4, wherein the control word further comprises a fourth field indicating a lane number.

6. The data transmission method according to any one of claims 1 to 5, wherein the first field comprises multiple groups of same fields, and each group of fields comprises multiple bits; and
the multiple groups of same fields are used to compensate for a difference between a clock cycle of the transmit end and a clock cycle of the receive end.

7. The data transmission method according to any one of claims 1 to 6, wherein the data is service data or training data; and
when the data is training data, the generating a bitstream comprises:
adding the control word after the data, to generate the bitstream.

8. A data transmission method over a wired serial link, applied at a receive end, and comprising:
receiving a bitstream, wherein the bitstream comprises data and a control word, and the control word comprises: a first field indicating start location information of the control word, a second field indicating end location information of the control word, and a third field used to carry link information indicating a wired serial link;
reading the control word from the bitstream based on the first field and the second field; and
reading the data from the bitstream based on the control word.

9. The data transmission method according to claim 8, wherein the method further comprises:
adjusting, based on the link information, at least one of the wired serial link: a power consumption status of hardware in a link, a working status of a circuit in a link, or a gain of a codec used in a link.

10. The data transmission method according to claim 8 or 9, wherein the reading the data from the bitstream based on the control word comprises:
determining a coding length of the control word based on the first field and the second field;
identifying a frame start location of the data from the bitstream based on the coding length of the control word; and
reading the data based on the frame start location of the data.

11. The data transmission method according to any one of claims 8 to 10, wherein there are multiple bitstreams, there are multiple lanes over the wired serial link, the multiple bitstreams are received from a transmit end through the multiple corresponding lanes, the link information further comprises a quantity of lanes for transmitting the multiple bitstreams, and the control word further comprises a fourth field indicating a lane number; and
the reading the data from the bitstream based on the control word comprises:
reading, based on the quantity of lanes for transmitting the multiple bitstreams and the fourth field, the data from the bitstream received through a corresponding lane.

12. The data transmission method according to claim 11, wherein the method further comprises:
canceling data skew between the multiple lanes based on a sequence of the multiple received bitstreams and a fourth field in each of multiple control words in the multiple bitstreams.

13. The data transmission method according to any one of claims 8 to 12, wherein the first field comprises multiple groups of same fields, and each group of fields comprises multiple bits; and
the method further comprises:
performing, based on a clock frequency offset between the receive end and the transmit end, one of the following operations: deleting at least one group of fields from the multiple groups of same fields, or adding at least one group of fields to the multiple groups of same fields.

14. A data transmission apparatus, wherein the data transmission apparatus comprises a processor and an interface;
the processor is configured to generate a bitstream, wherein the bitstream comprises data and a control word, and the control word comprises: a first field indicating start location information of the control word, a second field indicating end location information of the control word, and a third field used to carry link information indicating a wired serial link; and
the interface sends the bitstream over the wired serial link.

15. The data transmission apparatus according to claim 14, wherein the link information comprises at least one of the following: a quantity of lanes for transmitting a bitstream, a power consumption status of hardware in a link, a working status of a circuit in a link, or a gain of a codec used in a link.

16. The data transmission apparatus according to claim 14 or 15, wherein the first field and the second field indicate a receive end to perform frame delimitation on the data.

17. The data transmission apparatus according to any one of claims 14 to 16, wherein there are multiple bitstreams, there are multiple lanes over the wired serial link, the multiple bitstreams one-to-one correspond to the multiple lanes, and the interface is specifically configured to:
send the corresponding plurality of streams through the multiple lanes.

18. The data transmission apparatus according to claim 17, wherein the control word further comprises a fourth field indicating a lane number.

19. The data transmission apparatus according to any one of claims 14 to 18, wherein the first field comprises multiple groups of same fields, and each group of fields comprises multiple bits; and
the multiple groups of same fields are used to compensate for a difference between a clock cycle of the transmit end and a clock cycle of the receive end.

20. A data transmission apparatus, wherein the data transmission apparatus comprises a processor and an interface;
the interface is configured to receive a bitstream, wherein the bitstream comprises data and a control word, and the control word comprises: a first field indicating start location information of the control word, a second field indicating end location information of the control word, and a payload field used to carry link information indicating a wired serial link; and
the processor is configured to read the control word from the bitstream based on the first field and the second field, and read the data from the bitstream based on the control word.

21. The data transmission apparatus according to claim 20, wherein the processor is further configured to:
adjust, based on the link information, at least one of the wired serial link: a power consumption status of hardware in a link, a working status of a circuit in a link, or a gain of a codec used in a link.

22. The data transmission apparatus according to claim 20 or 21, wherein the processor is specifically configured to:
determine a coding length of the control word based on the first field and the second field;
identify a frame start location of the data from the bitstream based on the coding length of the control word; and
read the data based on the frame start location of the data.

23. The data transmission apparatus to any one of claims 20 to 22, wherein there are multiple bitstreams, there are multiple lanes over the wired serial link, the multiple bitstreams are received from a transmit end through the multiple corresponding lanes, the link information further comprises a quantity of lanes for transmitting the multiple bitstreams, the control word further comprises a fourth field indicating a lane number, and the processor is specifically configured to:
read, based on the quantity of lanes for transmitting the multiple bitstreams and the fourth field, the data from the bitstream received through a corresponding lane.

24. The data transmission apparatus according to claim 23, wherein the processor is further configured to:
cancel data skew between the multiple lanes based on a sequence of the multiple received bitstreams and a fourth field in each of multiple control words in the multiple bitstreams.

25. The data transmission apparatus according to any one of claims 20 to 24, wherein the first field comprises multiple groups of same fields, each group of fields comprises multiple bits, and the processor is further configured to:
perform, based on a clock frequency offset between the data transmission apparatus and the transmit end, one of the following operations: deleting at least one group of fields from the multiple groups of same fields, or adding at least one group of fields to the multiple groups of same fields.

26. A computer-readable storage medium, configured to store a computer program, wherein when the computer program is run by a processor, the method according to any one of claims 1 to 7 or the method according to any one of claims 8 to 13 is implemented.

27. A computer program product, wherein when the computer program product runs on a processor, the method according to any one of claims 1 to 7 or the method according to any one of claims 8 to 13 is implemented.
